# EUROPÄISCHE PATENTANMELDUNG

(11) **EP 1 241 797 A2**
(43) Veröffentlichungstag der Anmeldung: **18.09.2002**
(21) Anmeldenummer: 02003864.2
(22) Anmeldetag: 21.02.2002
(51) Int. Cl.: H04B 1/16

(54) **Verfahren zur Steuerung eines mehrkanaligen Tonwiedergabesystems und mehrkanaliges Tonwiedergabesystem**

(30) Priorität: 05.03.2001 DE 10110422
(71) Anmelder: Harman/Becker Automotive Systems ( Becker Division) GmbH Abt. Patente, 76307 Karlsbad (DE)
(72) Erfinder: Gierl, Stefan, Dr.-Ing., 76133 Karlsruhe (DE); Benz, Christoph, Dipl.-Ing., 77797 Ohlsbach (DE); Nitzpon, Hans-Jürgen, Dr.-Ing., 76337 Waldbronn (DE); Körner, Andreas, Dipl.-Ing., 76137 Karlsruhe (DE)
(74) Vertreter: Patentanwälte Westphal, Mussgnug & Partner

(57) **Zusammenfassung**

Die Tonwiedergabe eines mehrkanaligen Tonwiedergabesystems (T) mit mehreren Lautsprechern (L1-L6), das an den Ausgang eines FM-Stereoempfängers (FM) angeschlossen ist, wird von einem von der Empfangsqualität abgeleiteten Steuersignal (S) gesteuert. Vorzugsweise dient das Steuersignal (S) des FM-Stereoempfängers (FM) zur Steuerung des Stereo- und des Monoanteils auch zur Steuerung des mehrkanaligen Tonwiedergabesystems (T). Beispielsweise ist in Abhängigkeit vom Stereoanteil im Ausgangssignal (AS) des FM-Stereoempfängers (FM) Stereo-, Pseudostereo- oder Monowiedergabe im mehrkanaligen Tonwiedergabesystem (T) vorgesehen.

## Beschreibung

Die Erfindung betrifft ein Verfahren zur Steuerung eines mehrkanaligen Tonwiedergabesystems mit mehreren Lautsprechern, das an den Ausgang eines FM-Stereoempfängers angeschlossen ist, der in Abhängigkeit vom Empfangssignal den Stereo- und den Monoanteil in seinem Ausgangssignal steuert.

Die Erfindung betrifft weiter ein mehrkanaliges Tonwiedergabesystem mit mehreren Lautsprechern, das an den Ausgang eines FM-Stereoempfängers angeschlossen ist, bei dem in Abhängigkeit vom Empfangssignal der Stereo- und der Monoanteil im Ausgangssignal gesteuert sind.

FM-Stereoempfänger sind z.B. mit einer Steuerung ausgerüstet, die in Abhängigkeit von der Empfangsqualität den Stereo- und den Monoanteil im Ausgangssignal steuert. Man spricht von einer sogenannten Kanaltrennung, die insbesondere für FM-Stereoempfänger in Fahrzeugen geeignet ist, weil die Empfangsqualität für Stereoempfang in Folge der Beschaffenheit des gerade befahrenen Geländes häufig nicht mehr ausreicht. Aus diesem Grund wird bei sich verschlechternden Empfangsbedingungen der Stereoanteil im Wiedergabesignal verringert, während gleichzeitig der Monoanteil erhöht wird. Diese stufenlose Verschiebung von Stereo zu Mono kann bei schlechten Empfangsbedingungen bis zur vollständigen Monowiedergabe gehen.

An einen derartigen FM-Stereoempfänger läßt sich ein mehrkanaliges Wiedergabesystem mit mehreren Lautsprechern anschließen, das zur Verbesserung des räumlichen Klangbildes aus dem vom FM-Stereoempfänger gelieferten Ausgangssignal mehrere Wiedergabesignale für mehrere Lautsprecher erzeugt. Sobald sich aber im Ausgangssignal des FM-Stereoempfängers der Stereoanteil verringert, während gleichzeitig der Monoanteil erhöht wird, verschlechtert sich das räumliche Klangbild des mehrkanaligen Wiedergabesystems zusehends in deutlich hörbarer Weise, und es kann sogar zu einem vollständigen Zusammenbruch des räumlichen Klangbildes kommen. Starke Schwankungen der Emfangsqualität im mobilen Einsatz führen zu einem unzumutbaren Driften des Klangbildes.

Es ist daher Aufgabe der Erfindung, bei einem an einen FM-Stereoempfänger angeschlossenen mehrkanaligen Wiedergabesystem das Klangbild, insbesondere bei schwächer werdendem Stereosignal, zu verbessern, sowie das Driften des Klangbildes bei schwankender Empfangsqualität zu verhindern.

Die Erfindung löst diese Aufgabe verfahrensmäßig mit den im Anspruch 1 angegebenen Merkmalen dadurch, dass ein von der Empfangsqualität abgeleitetes Steuersignal das mehrkanalige Tonwiedergabesystem steuert.

Vorrichtungsmäßig wird diese Aufgabe mit den Merkmalen des Anspruchs 7 dadurch gelöst, dass das mehrkanalige Tonwiedergabesystem von einem von der Empfangsqualität abgeleiteten Steuersignal gesteuert ist.

Gemäß der Erfindung wird ein Steuersignal erzeugt, das ein Maß für die Empfangsqualität z.B. die Empfangsfeldstärke oder den Empfangspegel des FM-Stereoempfängers, darstellt. Dieses Steuersignal steuert die Tonwiedergabe des mehrkanaligen Tonwiedergabesystems.

Besonders vorteilhaft ist es, die Tonwiedergabe des mehrkanaligen Tonwiedergabesystems mit dem Steuersignal zu steuern, das im FM-Stereoempfänger zur Steuerung des Stereo- und des Monoanteils im Ausgangssignal dient. Bei diesem Ausführungsbeispiel der Erfindung ist zur Steuerung des mehrkanaligen Tonwiedergabesystems kein zusätzliches Steuersignal zu erzeugen, weil sich hierfür ein ohnehin bereits vorhandenes Steuersignal bestens eignet.

Das Steuersignal zur Steuerung des mehrkanaligen Tonwiedergabesystems kann aber auch aus einem der zahlreichen vom Tuner des FM-Stereoempfängers erzeugten Qualitätssignale abgeleitet werden.

Ein weiteres Ausführungsbeispiel der Erfindung sieht vor, die Tonwiedergabe des mehrkanaligen Tonwiedergabesystems in Abhängigkeit vom Stereoanteil im Ausgangssignal des FM-Stereoempfängers zu steuern.

Beispielsweise kann bei Absinken des Stereoanteils im Ausgangssignal des FM-Stereoempfängers unter einen vorgebbaren Schwellwert im mehrkanaligen Wiedergabesystem eine Stereowiedergabe erfolgen.

Anstelle einer Stereowiedergabe kann auch eine Pseudostereowiedergabe oder eine Monowiedergabe im mehrkanaligen Tonwiedergabesystem erfolgen. Besonders vorteilhaft ist es, bei Absinken des Stereoanteils im Ausgangssignal des FM-Stereoempfängers unter einen ersten vorgebbaren Schwellwert im mehrkanaligen Tonwiedergabesystem eine Stereowiedergabe vorzusehen. Bei weiterem Absinken des Stereoanteils im Ausgangssignal des FM-Stereoempfängers unter einen zweiten vorgebbaren Schwellwert wird im mehrkanaligen Tonwiedergabesystem auf eine Pseudostereowiedergabe umgeschaltet. Schließlich wird bei weiterem Absinken des Stereoanteils im Ausgangssignal des FM-Stereoempfängers unter einen dritten vorgebbaren Schwellwert von Pseudostereowiedergabe auf Monowiedergabe umgeschaltet. Bei Zunahme des Stereoanteils im Ausgangssignal des FM-Stereoempfängers wird entsprechend den vorgegebenen Schwellwerten auf Pseudostereo- oder Stereowiedergabe zurückgeschaltet.

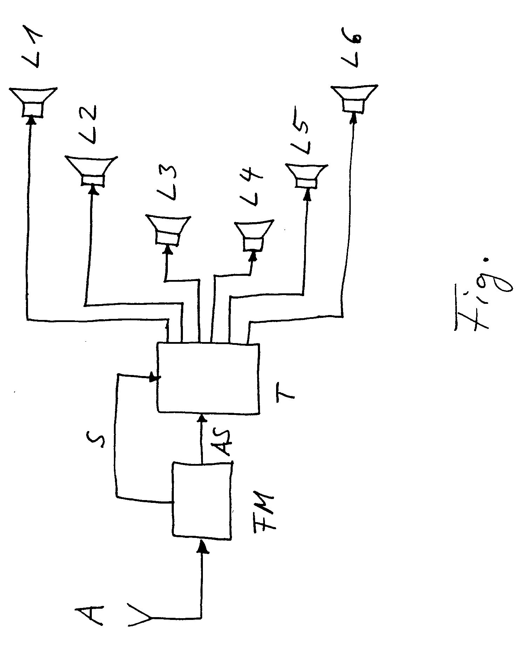

In der Figur ist ein Ausführungsbeispiel eines erfindungsgemäßen mehrkanaligen Tonwiedergabesystems T mit sechs Lautsprechern L1 bis L6 gezeigt, das an den Ausgang eines FM-Stereoempfängers FM angeschlossen ist. Der FM-Stereoempfänger FM empfängt über eine Antenne A Empfangssignale, die er in Ausgangssignale AS demoduliert und dem Eingang des mehrkanaligen Tonwiedergabesystems T zuführt. Im FM-Stereoempfänger FM wird ein Steuersignal S erzeugt, das ein Maß für die Empfangsqualität darstellt. Dieses Steuersignal S wird an den Steuereingang des mehrkanaligen Tonwiedergabesystems T gelegt.

Wie bereits erwähnt kann dieses Steuersignal S beispielsweise das im FM-Stereoempfänger FM erzeugte Steuersignal zur Steuerung des Stereo- und des Monoanteils im Ausgangssignal AS des FM-Stereoempfängers sein oder von einem der zahlreichen Qualitätssignale des Tuners des FM-Stereoempfängers abgeleitet sein.

Das erfindungsgemäße Verfahren zur Steuerung eines mehrkanaligen Tonwiedergabesystems sowie das erfindungsgemäße mehrkanalige Tonwiedergabesystem sind insbesondere für den mobilen Einsatz in Fahrzeugen geeignet, weil bei dieser Einsatzart ständig schwankende Empfangsverhältnisse auftreten. Die Erfindung ist aber auch für ein ortsfestes mehrkanaliges Tonwiedergabesystem geeignet, weil auch bei ortsfesten Anlagen die Empfangsqualität z.B. in Folge von Wetterphänomenen oder wegen defekter nur mit geringer Feldstärke sendender Sender unter kritische Werte sinken kann.

### Bezugszeichenliste

- A: Antenne
- AS: Ausgangssignal
- FM: FM-Stereoempfänger
- L1 bis L6: Lautsprecher
- T: mehrkanaliges Tonwiedergabesystem

## Patentansprüche

1. Verfahren zur Steuerung eines mehrkanaligen Tonwiedergabesystems (T) mit mehreren Lautsprechern (L1-L6), das an den Ausgang eines FM-Stereoempfängers (FM) angeschlossen ist, der in Abhängigkeit vom Empfangssignal den Stereo- und den Monoanteil im Ausgangssignal (AS) steuert,
**dadurch gekennzeichnet, dass**
ein von der Empfangsqualität abgeleitetes Steuersignal (S) die Tonwiedergabe des mehrkanaligen Tonwiedergabesystems (T) steuert.

2. Verfahren nach Anspruch 1,
**dadurch gekennzeichnet, dass**
das Steuersignal (S) des FM-Stereoempfängers (FM) zur Steuerung des Steuer- und des Monoanteils zur Steuerung des mehrkanaligen Tonwiedergabesystems (T) vorgesehen wird.

3. Verfahren nach Anspruch 1,
**dadurch gekennzeichnet, dass**
das Steuersignal (S) zur Steuerung des mehrkanaligen Tonwiedergabesystems (T) aus einem vom Tuner des FM-Stereoempfängers (FM) erzeugten Qualitätssignal abgeleitet wird.

4. Verfahren nach Anspruch 1, 2 oder 3,
**dadurch gekennzeichnet, dass**
im mehrkanaligen Tonwiedergabesystem (T) in Abhängigkeit vom Stereoanteil im Ausganssignal (AS) des FM-Stereoempfängers (FM) eine Stereo-, Pseudostereo- oder Monowiedergabe erfolgt.

5. Verfahren nach Anspruch 4,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) eine Stereowiedergabe erfolgt.

6. Verfahren nach Anspruch 4,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) eine Pseudostereowiedergabe erfolgt.

7. Verfahren nach Anspruch 4,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) Monowiedergabe erfolgt.

8. Verfahren nach Anspruch 4,
**dadurch gekennzeichnet, dass**
im mehrkanaligen Tonwiedergabesystem (T) Stereowiedergabe erfolgt, wenn der Stereoanteil im Ausgangssignal (AS) des FM-Stereoempfängers (FM) unter einem ersten Schwellwert liegt, daß Pseudostereowiedergabe erfolgt, wenn der Stereoanteil unter einem zweiten Schwellwert liegt, daß Monowiedergabe erfolgt, wenn der Stereoanteil unter einem dritten Schwellwert liegt, daß der erste Schwellwert größer als der zweite und der zweite größer als der dritte gewählt werden.

9. Mehrkanaliges Tonwiedergabesystem (T) mit mehreren Lautsprechern (L1-L6), das an den Ausgang eines FM-Stereoempfängers (FM) angeschlossen ist, bei dem in Abhängigkeit vom Empfangssignal der Stereo- und der Monoanteil im Ausgangssignal (AS) gesteuert sind,
**dadurch gekennzeichnet, dass**
zur Steuerung der Tonwiedergabe des Tonwiedergabesystems (T) ein von der Empfangsqualität abgeleitetes Steuersignal (S) vorgesehen ist.

10. Mehrkanaliges Tonwiedergabesystem nach Anspruch 9,
**dadurch gekennzeichnet, dass**
das Steuersignal (S) des FM-Stereoempfängers (FM) zur Steuerung des Stereo- und des Monoanteils zur Steuerung des mehrkanaligen Tonwiedergabesystems (T) vorgesehen ist.

11. Mehrkanaliges Tonwiedergabesystem nach Anspruch 9,
**dadurch gekennzeichnet, dass**
das Steuersignal (S) zur Steuerung des mehrkanaligen Tonwiedergabesystems (T) aus einem vom Tuner des FM-Stereoempfängers erzeugten Qualitätssignal abgeleitet ist.

12. Mehrkanaliges Tonwiedergabesystem nach Anspruch 9, 10 oder 11,
**dadurch gekennzeichnet, dass**
in Abhängigkeit vom Stereoanteil im Ausgangssignal (AS) des FM-Stereoempfängers (FM) im mehrkanaligen Tonwiedergabesystem (T) Stereo-, Pseudostereo- oder Monowiedergabe vorgesehen ist.

13. Mehrkanaliges Tonwiedergabesystem nach Anspruch 12,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) Stereowiedergabe vorgesehen ist.

14. Mehrkanaliges Tonwiedergabesystem nach Anspruch 12,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) Pseudostereowiedergabe vorgesehen ist.

15. Mehrkanaliges Tonwiedergabesystem nach Anspruch 12,
**dadurch gekennzeichnet, dass**
bei Absinken des Stereoanteils im Ausgangssignal (AS) des FM-Stereoempfängers (FM) unter einen vorgebbaren Schwellwert im mehrkanaligen Tonwiedergabesystem (T) Monowiedergabe vorgesehen ist.

16. Mehrkanaliges Tonwiedergabesystem nach Anspruch 12, 13, 14 oder 15,
**dadurch gekennzeichnet,dass**
im mehrkanaligen Tonwiedergabesystem (T) Stereowiedergabe vorgesehen ist, wenn der Stereoanteil im Ausgangssignal (AS) des FM-Stereoempfängers (FM) unter einem ersten Schwellwert liegt, daß Pseudostereowiedergabe vorgesehen ist, wenn der Stereoanteil unter einem zweiten Schwellwert liegt, daß Monowiedergabe vorgesehen ist, wenn der Stereoanteil unter einem dritten Schwellwert liegt und dass der erste Schwellwert größer als der zweite und der zweite größer als der dritte gewählt ist.
